Europäisches Patentamt

European Patent Office

Office européen des brevets

(19)

(11) **EP 0 490 427 B1**

(12) **EUROPÄISCHE PATENTSCHRIFT**

(45) Veröffentlichungstag und Bekanntmachung des Hinweises auf die Patenterteilung:
**12.03.1997 Patentblatt 1997/11**

(51) Int Cl.$^6$: **H04L 1/06**

(21) Anmeldenummer: **91203154.9**

(22) Anmeldetag: **03.12.1991**

(54) **Empfänger mit mindestens zwei Empfangszweigen**

Receiver with at least two receive branches

Récepteur ayant au moins deux branches de réception

(84) Benannte Vertragsstaaten:
**CH DE ES FR GB IT LI**

(30) Priorität: **08.12.1990 DE 4039245**

(43) Veröffentlichungstag der Anmeldung:
**17.06.1992 Patentblatt 1992/25**

(73) Patentinhaber: **Lucent Technologies Inc.
Murray Hill, New Jersey 07974-0636 (US)**

(72) Erfinder: **Koch, Wolfgang, Dr. Ing.
W-8501 Heroldsberg (DE)**

(74) Vertreter: **Tergau, Enno, Dipl.-Ing. et al
Tergau & Pohl
Patentanwälte
Mögeldorfer Hauptstrasse 51
90482 Nürnberg (DE)**

(56) Entgegenhaltungen:
**EP-A- 0 388 163        EP-A- 0 396 101
US-A- 4 734 920        US-A- 4 737 928
US-A- 4 884 272**

**Beschreibung**

Die Erfindung betrifft einen Empfänger mit mindestens zwei Empfangszweigen mit einer Einrichtung zur Kombinierung der Empfangszweige.

Empfänger mit mindestens zwei Empfangszweigen, bei denen in jedem Empfangszweig jeweils ein Signal mit gleichem Signalinhalt empfangen wird, werden als Diversity-Empfänger bezeichnet und sind beispielsweise bei Mobilfunksystemen einsetzbar. Beim sogenannten Raum-Diversity sind die Antennen der jeweiligen Empfangszweige räumlich einige Wellenlängen entfernt voneinander angeordnet. Beim sogenannten Frequenz-Diversity werden die Signale auf verschiedenen Frequenzen ausgesendet und empfangen. Wegen der für jeden Übertragungsweg bzw. jede Frequenzlage verschiedenen Übertragungsbedingungen werden die Signale in den einzelnen Empfangszweigen mit unterschiedlicher Güte empfangen. Durch entsprechende Verarbeitung der in den einzelnen Empfangszweigen empfangenen Signale ist es möglich, ein Empfangssignal zu gewinnen, welches beispielsweise hinsichtlich des Störabstandes bessere Eigenschaften aufweist als die einzelnen empfangenen Signale.

In der deutschen Patentanmeldung P 40 18 044.1 (Anmeldetag 06.06.1990) ist ein Empfänger mit mindestens zwei Empfangszweigen zum Empfang einer gesendeten Datenfolge beschrieben. Dabei ist in jedem Empfangszweig ein Entzerrer angeordnet. Die Entzerrer sind so ausgestaltet, daß sie neben der Detektierung der empfangenen Daten auch zu jedem detektierten Datensymbol eines Datenelements eine Zuverlässigkeitsinformation liefern. Die Entzerrer basieren dabei auf dem sogenannten Viterbi-Verfahren. Die Entzerrung erfolgt in jedem Zweig getrennt, so daß dies einen relativ hohen Realisierungsaufwand erfordert.

Der Erfindung liegt die Aufgabe zugrunde, einen Empfänger der eingangs genannten Art anzugeben, bei dem eine separate Entzerrung in jedem Empfangszweig vermieden wird.

Diese Aufgabe wird bei einem Empfänger der eingangs genannten Art dadurch gelöst, daß jeder Empfangszweig jeweils ein angepaßtes Filter und jeweils eine Einrichtung zur Bildung der jeweiligen Autokorrelationsfunktion zur geschätzten Impulsantwort der einzelnen Empfangszweige aufweist, daß der Empfänger eine erste Summiereinrichtung zur Summierung von mit Gewichtungsfaktoren gewichteten Ausgangssignalen der angepaßten Filter zu einer ersten Summe und eine zweite Summiereinrichtung zur Summierung der mit den Gewichtungsfaktoren gewichteten Autokorrelationsfunktionen der Empfangszweige zu einer zweiten Summe und einen die erste und zweite Summe auswertenden Entzerrer aufweist, wobei die Gewichtungsfaktoren in etwa umgekehrt proportional zu einer momentanen Störleistung im jeweiligen Empfangszweig sind.

Durch die Bildung der ersten und zweiten Summe in der angegebenen Weise und die Auswertung dieser Summen durch den Entzerrer wird das Nutz-Störleistungs-Verhältnis des Empfangssignals maximiert ( = Maximum Ratio Combining). Die eigentliche Entzerrung erfolgt mit Hilfe lediglich eines einzigen Entzerrers. Hierdurch ist der Realisierungaufwand gegenüber einem Empfänger mit in jedem Zweig angeordneten Entzerrern erheblich reduziert und dennoch sind beispielsweise die Qualitätsanforderungen beim zukünftigen europäischen Mobilfunksystem (GSM-System) einhaltbar.

Eine Gewinnung von Metriken für lediglich einen insbesondere auf dem Viterbi-Verfahren basierenden Entzerrer wird dadurch möglich, daß der Entzerrer eine Auswerteeinrichtung zur Auswertung der ersten und zweiten Summe aufweist, wobei in der Auswerteeinrichtung aus der ersten und zweiten Summe Metriken für den insbesondere auf dem Viterbi-Verfahren basierenden Entzerrer gewinnbar sind.

Bei zeitlich veränderlichen Übertragungssystemen, wie z.B. bei Mobilfunksystemen, wird die Übertragungsqualität wesentlich dadurch verbessert, daß der Empfänger in mindestens einem Empfangszweig Mittel zur Anpassung der geschätzten Impulsantwort in vorgebbaren Abständen an die Übertragungsbedingungen aufweist. Wird die geschätzte Impulsantwort lediglich in einem Empfangszweig angepaßt, so führt dies zu einer weiteren Verringerung des Realisierungsaufwands.

Eine Aufwandverminderung ohne nennenswerte Qualitätsverluste ergibt sich dadurch, daß die Mittel zur Anpassung eine geschätzte Impulsantwort lediglich in dem Empfangszweig anpassen, der das größte geschätzte Nutz-Störleistungsverhältnis aufweist. Damit wird es möglich, in einem Empfänger für das GSM-System die sogenannte "Maximum-Ratio-Combination" beispielsweise für zwei Empfangszweige in lediglich einem Signalprozessor ablaufen zu lassen, während für bisher bekannte Lösungen zwei Signalprozessoren desselben Typs erforderlich waren.

Eine Entzerrung mit dem Viterbi-Entzerrer erst nach der Kombination der beiden Empfangszweige erfolgt dadurch, daß die Metriken gemäß der Gleichung

$$\lambda(S_{n-1}, S_n) = -\mathrm{Re}\left\{c_n \left(y_n - \sum_{l=1}^{L} c_{n-l}\, \rho_l\right)\right\} \quad, \text{ mit } c_n = 1-2b_n$$

gebildet werden, wobei die Binärzeichen $b_{n-l}..b_n$ den Übergang eines Zustandes $S_{n-1}$ in einen Zustand $S_n$, $y_n$ die erste Summe und $\rho_l$ die zweite Summe kennzeichnen, n einen Abtastzeitpunkt und 1 eine endliche Anzahl von vorausgehenden Binärzeichen angibt. Auf diese Weise wird der Implementierungsaufwand entscheidend verringert.

Verzerrungen können dadurch ausgeglichen werden, daß in der gesendeten Datenfolge eine Trainigsdatenfolge enthalten ist, aus der mit einer im Empfänger gespeicherten Vergleichsdatenfolge die Impulsantwort der Übertragungsstrecke in jedem Empfangszweig individuell geschätzt wird. Dabei wird mit Hilfe der geschätzten Impulsantwort die Übertragungsstrecke bestmöglich nachgebildet.

Im folgenden wird die Erfindung anhand der in den Figuren dargestellten Ausführungsbeispiele näher erläutert. Es zeigen:

Fig. 1 ein Übertragungssystem mit einem Empfänger mit zwei Empfangszweigen.

Fig. 2 ein Kanalmodell eines Übertragungskanals.

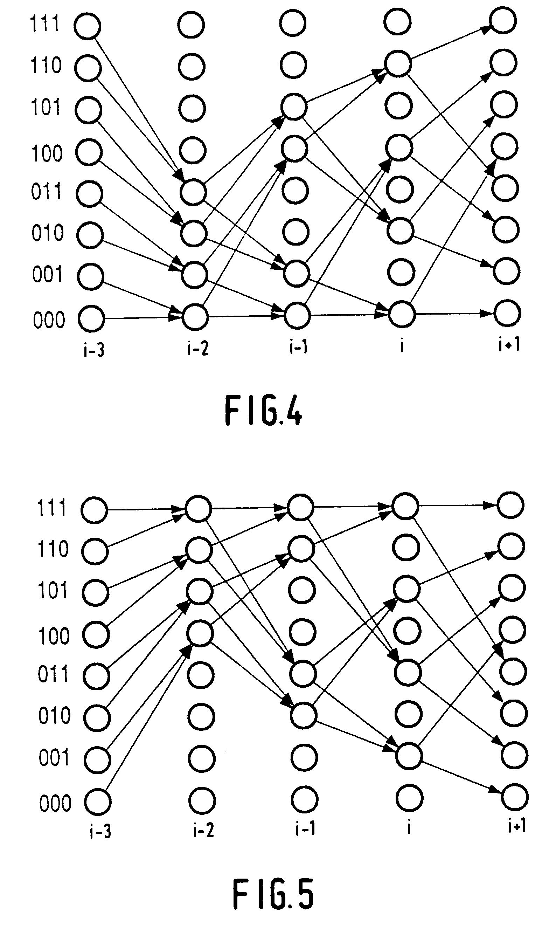

Fig. 3 bis Fig. 5 Zustandsdiagramme für einen Entzerrer.

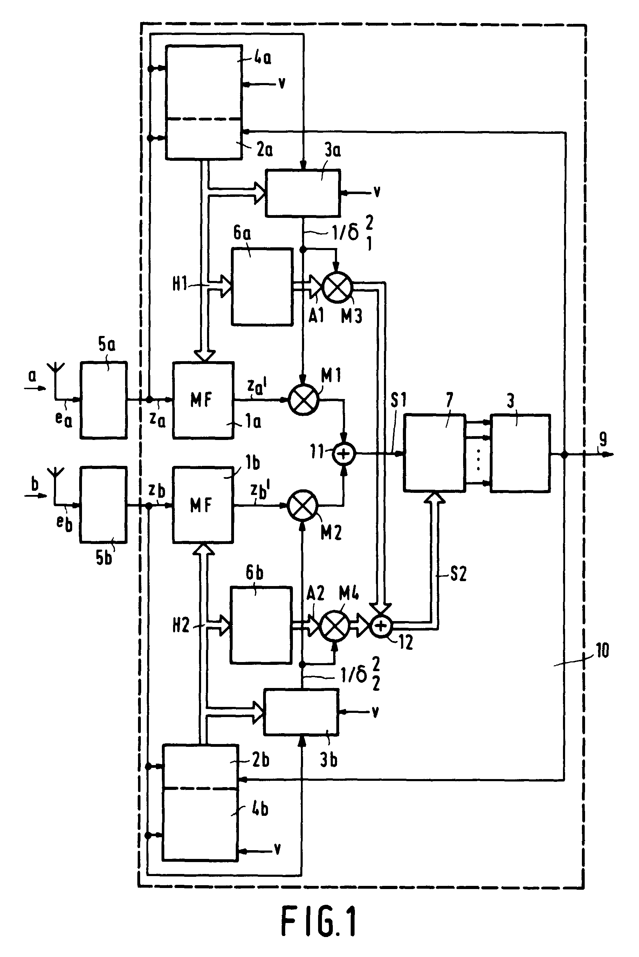

Fig. 1 zeigt einen Diversity-Empfänger für das GSM-System mit zwei Empfangszweigen a, b. Zur Kombinierung der beiden Empfangszweige a, b ist eine Kombinationseinrichtung 10 vorgesehen. Dazu werden Empfangssignale $e_a$, $e_b$ zunächst jeweils einem Empfangskreis 5a, 5b zugeführt, der aus einem HF-Empfangsteil, und einer Einrichtung zur Erzeugung von Normal- und Quadratur-Komponente im Basisband besteht. Am Ausgang der Empfangskreise 5a, 5b liegen Signale $z_a$, $z_b$, die jeweils einem durch geschätzte Impulsantworten H1, H2 der Empfangszweige a, b angesteuerten adaptiven, angepaßten Filter 1a, 1b (Matched Filter MF) zugeführt werden. Die geschätzten Impulsantworten H1, H2 werden mit Hilfe jeweils einer Schätzeinrichtung 4a, 4b gebildet. Hierzu werden den Schätzeinrichtungen 4a, 4b die Signale $z_a$, $z_b$ sowie eine beispielsweise in einem Speicher gespeicherte Vergleichsdatenfolge v zugeführt, wie dies beispielsweise in DE 40 01 592-A1 beschrieben ist. Hierbei wird beispielsweise zu Beginn einer Funkübertragung in einem ersten Schritt mit Hilfe einer in den Empfangssignalen $e_a$, $e_b$ und damit auch in den Signalen $z_a$, $z_b$ enthaltenen Trainingsdatenfolge durch den Vergleich mit der in den Schätzeinrichtungen 4a, 4b eine geschätzte Impulsantwort H1, H2 ermittelt. Diese wird dann im weiteren Verlauf einer Übertragung in weiteren Schritten an die veränderten Funkbedingungen angepaßt. Hierzu ist bei dem in Fig. 1 dargestellten Ausführungsbeispiel in jeder Schätzeinrichtung 4a, 4b eine Anpassungseinrichtung 2a, 2b vorgesehen. Diesen werden die Signale $z_a$, $z_b$ sowie das Ausgangssignal 9 der Kombinationseinrichtung 10 zugeführt. Die Kanalimpulsantworten H1, H2 können mit Hilfe der Schätzeinrichtungen 4a, 4b jedoch auch nach einem anderen Verfahren geschätzt werden, insbesondere dann, wenn in den Empfangssignalen $e_a$, $e_b$ keine Trainingsdatenfolge enthalten ist.

Am Ausgang der angepaßten Filter 1a, 1b liegen Ausgangssignale $z_a'$, $z_b'$, die jeweils Multiplizierern M1, M2 zugeführt werden. Die Multiplizierer M1, M2 bewirken eine Gewichtung der Ausgangssignale $z_a'$, $z_b'$ mit dem umgekehrt proportionalen der momentanen Störleistungen $\sigma_1^2$, $\sigma_2^2$ der einzelnen Empfangszweige. Die Störleistungen $\sigma_1^2$, $\sigma_2^2$ bzw. die umgekehrt proportionalen Werte $1/\sigma_1^2$, $1/\sigma_2^2$ der einzelnen Empfangszweige a, b werden jeweils in Einrichtungen 3a, 3b aus den geschätzten Impulsantworten H1, H2, aus den Signalen $z_a$, $z_b$ und aus der Vergleichsdatenfolge v gebildet. Die Ausgangssignale der Multiplizierer M1, M2 werden nach der Multiplikation mittels einer ersten Summiereinrichtung 11 zu einer ersten Summe S1 addiert. Die erste Summe S1 wird einer Einrichtung 7 zur Berechnung von Metriken für einen nachgeschalteten Entzerrer 3 zugeführt, der hieraus das Ausgangssignal 9 bildet. Aus den geschätzten Impulsantworten H1, H2 der beiden Empfangszweige a, b werden darüber hinaus Autokorrelationsfunktionen A1, A2 der Impulsantworten H1, H2 der beiden Empfangszweige a, b in Einrichtungen 6a, 6b zur Bildung der Autokorrelationsfunktion A1, A2 gewonnen. Die Ausgangssignale der Einrichtungen 6a, 6b zur Bildung der Autokorrelationsfunktion werden Multiplizierern M3, M4 zugeführt, die eine Gewichtung mit dem umgekehrt proportionalen der momentanen Störleistungen $\sigma_1^2$, $\sigma_2^2$ bewirken. Nach diesen Multiplikationen werden die Ausgangssignale der Multiplizierer M3, M4 mittels einer zweiten Summiereinrichtung 12 zu einer zweiten Summe S2 addiert. Der Entzerrer 3 basiert auf dem Viterbi-Verfahren, dessen Metriken aus der ersten S1 und zweiten S2 Summe gewonnen werden.

Die eigentliche Entzerrung der Signale $z_a$, $z_b$ der Empfangszweige a, b erfolgt mit Hilfe lediglich eines einzigen Entzerrers 3, wodurch der Realisierungsaufwand gegenüber einem Empfänger mit in jedem Zweig angeordneten Entzerrern erheblich reduziert wird. Bei einer Ausgestaltungsform werden die geschätzten Impulsantworten H1, H2 der einzelnen Empfangszweige a, b während der Entzerrung in vorgebbaren Zeitabständen mit Hilfe der Anpassungseinrichtungen 2a, 2b an die Übertragungsbedingungen angepaßt, wodurch die Übertragungsqualität wesentlich verbessert wird. Dabei kann insbesondere zur Reduzierung des Realisierungsaufwands die Anpassung der Kanalimpulsantwort H1, H2 lediglich in einem vorgebbaren Empfangszweig a oder b erfolgen. Eine derartige Nachführung der Impulsantwort H1, H2 wird dabei beispielsweise in dem jeweils Besten der beiden Zweige a oder b durchgeführt, da bei Diversity die Empfangsqualität überwiegend von dem jeweils besseren Empfangszweig a, b bestimmt wird. Durch Simulationen konnte nachgewiesen werden, daß eine hierdurch verursachte Degradation selbst bei schnell veränderlichen Impulsantworten minimal und damit vernachlässigbar ist.

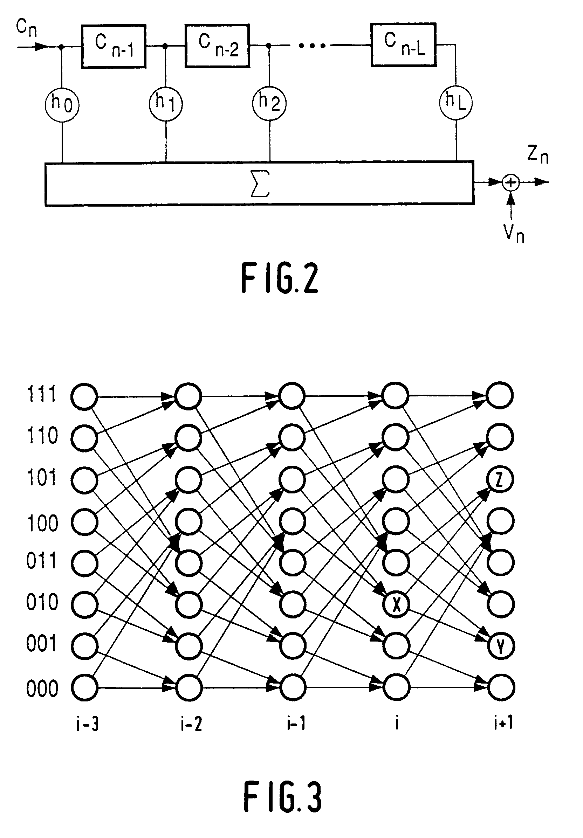

Dem in Fig. 2 dargestellten Kanalmodell eines Übertragungskanals liegt die Vorstellung zugrunde, daß ein Abtastwert eines Empfangssignals zum Zeitpunkt n nur von dem zum Zeitpunkt n ausgesendeten Binärzeichen und einer endlichen Anzahl L von vorausgehenden Binärzeichen linear abhängt. Ein derartiger Übertragungskanal, der Modulation, HF-Kanal, Sende- und Empfangsfilter sowie additive Störung und Abtastung mit einschließt, kann für jeden einzelnen Empfangszweig zugrunde gelegt werden. Die Übertragungseigenschaften des Übertragungskanals werden durch Filterkoeffizienten $h_0...h_L$ und den statistischen Eigenschaften eines additiv überlagerten Störsignals beschrieben. Bei der Übertragung eines Binärzeichens bn eines Transversalfilters und dem diesen Binärzeichen Bn vorangegenen n Binärzeichen $b_{n-1}..b_{n-L}$ wird eine Linearkombination gebildet, so daß sich im Zweig k zum Zeitpunkt n ein Abtastwert $z_{k'n}$ aus

$$z_{k,n} = \sum_{l=0}^{L} c_{n-l} \cdot h_{k,l} + V_n$$

Dabei stellen die Koeffizienten $h_{k,o}, h_{k,1}, ... h_{k,L}$ Abtastwerte der Kanalimpulsantwort des Zweiges k dar. Zur Ableitung der Filterkoeffizienten kann beispielsweise eine sogenannte Trainigssequenz verwendet werden, die aus einer Binärzeichenfolge besteht, die sowohl dem Sender als auch dem Empfänger bekannt ist. Bei jedem Empfang der Trainingssequenz werden die Filterkoeffizienten so eingestellt, daß das Ausgangssignal des Transversalfilters mit dem entsprechenden Teil des Empfangssignales möglichst gut übereinstimmt. Dieser Vorgang wird allgemein als Kanalschätzung bezeichnet und ist beispielsweise in dem Aufsatz A. Bayer, "Correlative and iterative Channel-Estimation in adaptive Viterbi-Equalizers for TDMA Mobil Radio Channels", ITG-Fachbericht 109 zur Fachtagung "Stochastische Modelle und Methoden in der Informationstechnik", April 1989, abgedruckt in VDE-Fachbericht 107, VDE-Verlag, Berlin, Seiten 363 bis 368 beschrieben. Dort finden sich auch weiterführende Literaturhinweise.

Das Störsignal Vn wird allgemein durch die Varianz $\sigma^2$ (=Störleistung) charakterisiert. Dazu liegt in jedem Empfangszweig a, b beispielsweise ein Schätzwert $\sigma^2$ für die Varianz vor. Bei GSM-Empfängern kann dieser Schätzwert in jedem Zeitschlitz z.B. mit Hilfe der geschätzen Impulsantwort und der Trainingssequenz erfolgen, wie dies beispielsweise in der deutschen Patentanmeldung P 40 01 592.0 (Anmeldetag 20.01.1990) beschrieben ist.

Fig. 3 zeigt ein Zustandsdiagramm für einen Entzerrer, der auf dem Viterbiverfahren basiert. Zur Darstellung dieses Verfahrens wird üblicherweise ein Zustandsdiagramm verwendet, der als Graph mit in vertikaler Richtung aufgetragenen Reihen von jeweils $2^L$ Knoten dargestellt ist. Bei dem in Fig. 3 dargestellten Zustandsdiagramm wurde L = 3 gewählt. Jeder Knoten repräsentiert dabei eine der Kombinationen, die sich aus 1 Binärzeichen ergeben. L ist hierbei die Anzahl der einem gerade gesendeten Binärzeichen jeweils vorausgehenden Binärzeichen, deren Einfluß auf das zu schätzende Binärzeichen bei der Entzerrung berücksichtigt werden soll und entspricht der Anzahl der Speicherelemente des Kanalmodells nach Fig. 2. Jede Kombination dieser Binärzeichen wird im folgenden als Zustand bezeichnet. Im Zustandsdiagramm sind in horizontaler Richtung mehrere dieser Reihen angeordnet. Jede vertikale Reihe ist einem bestimmten Abtastzeitpunkt i-3, i-2, i-1, i, i+1 zugeordnet. Die einzelnen, einem Knoten zuordenbaren, Binärwerte (in Fig. 3 000...111) werden als dessen Zustand bezeichnet.

Dem in horizontaler Richtung aufgereihten Knoten ist im Zustandsdiagramm jeweils der gleiche Zustand zugeordnet, wobei die diesen Zuständen zugeordnete Binärwertfolge so dargestellt ist, daß der links stehende Binärwert dem zuletzt gesendeten Bit der nächst darauffolgende Binärwert dem diesen Binärwert vorangegangenen Binärwertusw.. Der Zustand unmittelbar vor der Übertragung des Binärwertes $b_i$ ist somit definiert durch die Binärwertfolge $b_{i-1}$, $b_{i-2}$,... $b_{i-L}$.

Beim Empfang eines neuen Abtastwertes $z_i$ kann dem zum Zeitpunkt i ausgesendeten Bit sowohl der Binärwert 0 als auch der Binärwert 1 zugeordnet werden. Zum Beispiel wird aus einer Binärwertfolge 010 durch einen angenommenen Binärwert $b_i$=0 die Folge 0010 bzw. durch einen angenommenen Binärwert $b_i$=1 die Folge 1010, die dem Übergang zum Folgezustand zugeordnet werden kann. Aus dem Zustand 010 gelangt man auf diese Weise zu den Zuständen 001 bzw. 101. Von jedem Zustand gibt es aufgrund der zwei Werte, die das neue Bit annehmen kann immer nur zwei Übergänge zu jeweils einem Zustand in der zu dieser Zustandsreihe jeweils benachbarten rechten Zustandsreihe.

Im Zustandsdiagramm der Fig. 3 sind alle auf diese Weise möglichen Übergänge durch Pfeile gekennzeichnet. So zeigen die zwei Pfeile vom Knoten x, dessen Zustand der Binärwertfolge 010 zum Zeitpunkt i zugeordnet ist, zum einen für einen Null-Übergang auf den Knoten y, dem zum Zeitpunkt i+1 der Zustand 001 und zum anderen für einen Eins-Übergang auf den Knoten z, dem zum Zeitpunkt i+1 der Zustand 101, zugeordnet ist.

Für jeden Übergang von einem Knoten auf den nächstfolgenden Knoten wird die Wahrscheinlichkeit geschätzt, mit der dieser Übergang erfolgt ist. Durch Aneinanderreihung von zusammenhängenden Übergängen zwischen Knoten benachbarter vertikaler Knotenreihen erhält man einen Pfad. Dieser Pfad ist gleichbedeutend der rekonstruierten Binärfolge $b_i$, $b_{i-1}...b_{i-L}$. Durch multiplikative Verknüpfung der Wahrscheinlichkeiten der einzelnen Übergänge eines Pfades ergibt sich die gesamte Wahrscheinlichkeit des Pfades.

Zur Berechnung der Übergangswahrscheinlichkeit von einem Zustand zu einem anderen Zustand werden die einzelnen Binärwerte der Binärzeichen $b_i...b_{i-L}$ eines Zustands als Eingangsparameter $c_i...c_L$ des Transversalfilters nach Fig. 2 verwendet. Der erste Eingangsparameter $c_i$ definiert jeweils den Übergang vom Vorgängerzustand zum nächsten Zustand und die folgenden Eingangsparameter $b_{i-1}...b_{i-L}$ definieren den Verzögerungszustand $S_{i-1}$. Der Ausgangswert des Transversalfilters ergibt näherungsweise zum Zeitpunkt i den Wert z, den der Abtastwert des ungestörten Empfangssignals annehmen müßte, wenn die als Eingangsparameter verwendete Binärzeichenfolge $b_i$, $b_{i-1}...b_{i-L}$ über den Funkübertragungsweg gesendet und empfangen worden wäre. Durch Vergleich des Ausgangswertes $z_i$ mit dem tatsächlichen Abtastwert $z_i$ des Empfangssignals könnte daher die am wahrscheinlichsten gesendete Binärzeichenfolge $b_i...b_{i-L}$ bereits gefunden werden.

Allerdings bietet eine große Übergangswahrscheinlichkeit von einem Zustand zu einem zeitlich folgenden Zustand noch keine ausreichende Gewähr für die Richtigkeit dieses Übergangs. Denn durch kurzzeitige Störungen oder Signalrauschen kann zufälligerweise ein tatsächlich nicht erfolgter Zustandsübergang als wahrscheinlichster Übergang erscheinen. Korrektere Schätzungen der Zustandsübergänge und somit der Schätzung des Binärwertes des gerade empfangenen digitalen Abtastwertes werden durch eine Berücksichtigung des gesamten bisherigen Signalverlaufs in Form einer kummulativen Wahrscheinlichkeitsbetrachtung aller Zustandsübergänge, die zu einem der $2^L$ Zustände des betrachteten Zeitpunktes führen, erzielt. Hierzu kann jedem Zustand eine Gesamtmaßzahl zugeordnet werden, die entsprechend einer Bildung der Verbundwahrscheinlichkeit durch multiplikative Verknüpfung aller einzelnen Maßzahlen der einzelnen Zustandsübergänge, die auf diesen Zustand führten, gebildet wird.

Anstelle der Maßzahlen können sogenannte Metriken verwendet werden. Die Metrik berechnet sich hierbei aus dem negativen Logarithmus der jeweiligen Maßzahl. Dies hat unter anderem den Vorteil, daß zur Errechnung einer Verbundwahrscheinlichkeit, bei der die einzelnen Maßzahlen zu multiplizieren sind, nun die Metriken nur noch addiert werden müssen.

Damit sind für jeden möglichen Zustandübergang $2^{L+1}$ Metriken oder sogenannte Metrikinkremente zu ermitteln. Für jeden Folgezustand wird eine neue Metrik ermittelt.

Grundlage der Erfindung ist die Berechnung der Metrikinkremente gemäß der Gleichung:

$$\lambda(S_{n-1},\ S_n)\ =\ -Re\ \{c_n\ (Y_n\ -\ \sum_{l=1}^{L}\ c_{n-l}\ \rho_l)\}\ \ ,\ mit\ c_n\ =\ 1-2b_n.$$

Dabei kennzeichnen die Binärzeichen $b_{n-l}$ und $b_n$ den Übergang eines Zustandes $S_{n-1}$ in einen Zustand $S_n$. $y_n$ beschreibt die erste Summe und $\rho_l$ die zweite Summe, während n einen Abtastzeitpunkt und 1 eine endliche Anzahl von vorausgehenden Binärzeichen angibt. Dabei erhält man $y_n$ aus der gewichteten Addition der angepaßten Filter 1a, 1b (Fig. 1) und 1 für 1=0, 1.., L aus der gewichteten Addition der Autokorrelationsfunktionen der geschätzten Kanalimpulsantwort jedes Empfangszweiges. Mathematisch ausgedrückt erhält man $y_n$ bei K Empfangszweigen aus

$$y_n = \sum_{k=1}^{K} \frac{y_{k,n}}{\sigma_k^2} \qquad mit \qquad y_{k.n} = \sum_{l=0}^{L} z_{k,n+l} h_{k,l}^{\bar{}} .$$

Darin bedeuten:

$\sigma_k^2$ die im Zweig k geschätzte Störsignalleistung, $h_{k,0}$, $h_{k,1},... h_{k,L}$ die für den Zweig K geschätzten Koeffizienten des Kanalmodells nach Fig. 2 (der hochgestellte Stern bedeutet, daß die konjugiert komplexen Werte hier einzusetzen sind,

$z_{k,1}$, $z_{k,2},...z_{k,N}$ die Abtastwerte des im Zweig k empfangenen Signals für die Dauer eines Zeitschlitzes. Die Werte stellen das Basisbandäquivalent des Empfangssignals dar.

Ferner ergibt sich

$$\rho_l = \sum_{k=1}^{K} \frac{\rho_{k,l}}{\sigma_k^2} \qquad \texttt{mit} \qquad \rho_{k,l} = \sum_{i=0}^{L-1} h_{k,i+l} h_{k,i}^*$$

Die letzten beiden Gleichungen müssen dabei immer nur dann ausgeführt werden, wenn sich die Kanalimpulsantwort ändert. Dies ist im allgemeinen nicht bei jedem Zustandsübergang (Trellisschritt) der Fall. Bei einem für das GSM-System realisierten Empfänger ist dies beispielsweise lediglich alle 10 Trellisschritte erforderlich.

Die eigentliche Entzerrung mit dem Viterbi-Verfahren erfolgt gemeinsam für alle Empfangszweige. Damit wird es beispielsweise bei einem Empfänger für zwei Empfangszweige möglich, die sogenannte Maximum-Ratio-Kombination für zwei Empfangszweige in einem Signalprozessor vom Typ DSP16A von AT & T ablaufen zu lassen, während vorher zwei Prozessoren dieses Typs erforderlich waren.

Der vorgeschlagene Empfänger eignet sich beispielsweise für das GSM-System, bei der eine GMSK-Modulation zum Einsatz kommt. Das vorgeschlagene Verfahren ist außerdem immer dann anwendbar, wenn der gesamte Übertragungsweg von den zu übertragenden digitalen Daten, die durchaus Redundanz zur Fehlerkorrektur und/oder zur Synchronisation enthalten können, bis zum Empfängereingang ein lineares System darstellt oder zumindest näherungsweise durch ein lineares System beschrieben werden kann. Das vorgeschlagene Verfahren ist jedoch nicht beschränkt auf Systeme mit Zeitschlitzstruktur, wie dies beispielsweise beim GSM-System der Fall ist.

## Patentansprüche

1. Empfänger (5a, 5b, 10) mit mindestens zwei Empfangszweigen (a, b) mit einer Einrichtung (10) zur Kombinierung der Empfangszweige (a, b),
   dadurch gekennzeichnet,
   daß jeder Empfangszweig (a, b) jeweils ein angepaßtes Filter (1a, 1b) und jeweils eine Einrichtung (6a, 6b) zur Bildung der jeweiligen Autokorrelationsfunktion (A1, A2) zur geschätzten Impulsantwort (H1, H2) der einzelnen Empfangszweige (a, b) aufweist, daß der Empfänger (5a, 5b, 10) eine erste Summiereinrichtung (11) zur Summierung von mit Gewichtungsfaktoren gewichteten Ausgangssignalen ($z_a'$, $z_b'$) der angepaßten Filter (1a, 1b) zu einer ersten Summe (S1) und eine zweite Summiereinrichtung (12) zur Summierung der mit den Gewichtungsfaktoren gewichteten Autokorrelationsfunktionen (A1, A2) der Empfangszweige (a, b) zu einer zweiten Summe (S2) und einen die erste (S1) und zweite (S2) Summe auswertenden Entzerrer (3, 7) aufweist, wobei die Gewichtungsfaktoren in etwa umgekehrt proportional zu einer momentanen Störleistung ($\sigma_1^2$, $\sigma_2^2$) im jeweiligen Empfangszweig (a, b) sind.

2. Empfänger nach Anspruch 1,
   dadurch gekennzeichnet,
   daß der Entzerrer (3, 7) eine Auswerteeinrichtung (7) zur Auswertung der ersten (S1) und zweiten (S2) Summe aufweist, wobei in der Auswerteeinrichtung (7) aus der ersten (S1) und zweiten (S2) Summe Metriken für den insbesondere auf dem Viterbi-Verfahren basierenden Entzerrer (3, 7) gewinnbar sind.

3. Empfänger nach einem der Ansprüche 1 oder 2,
   dadurch gekennzeichnet,
   daß der Empfänger (5a, 5b, 10) in mindestens einem Empfangszweig (a, b) Mittel (2a, 2b) zur Anpassung der geschätzten Impulsantwort (H1, H2) in vorgebbaren Abständen an die Übertragungsbedingungen aufweist.

4. Empfänger nach Anspruch 3,
   dadurch gekennzeichnet,
   daß die Mittel (2a, 2b) zur Anpassung eine geschätzte Impulsantwort (H1, H2) lediglich in dem Empfangszweig (a, b) anpassen, der das größte geschätzte Nutz-Störleistungsverhältnis aufweist.

5. Empfänger nach einem der Ansprüche 1 bis 4,
   dadurch gekennzeichnet,
   daß die Metriken gemäß der Gleichung

$$\lambda(S_{n-1}, S_n) = -\text{Re}\ \{c_n\ (Y_n - \sum_{l=1}^{L} c_{n-l}\ \rho_l)\}\ \ , \ \text{mit}\ c_n = 1-2b_n$$

gebildet werden, wobei die Binärzeichen $b_{n-L}..b_n$ den Übergang eines Zustandes $S_{n-1} = (b_{n-L}...b_{n-1})$ in einen Zustand $S_n = (b_{n-L+1}...b_n)$, $y_n$ die erste Summe (S1) und $\rho_l$ die zweite Summe (S2) kennzeichnen, n einen Abtastzeitpunkt und l eine endliche Anzahl von vorausgehenden Binärzeichen angibt.

6. Empfänger nach einem der Ansprüche 1 bis 5,
   dadurch gekennzeichnet,
   daß der Empfänger (5a, 5b, 10) eine Schätzeinrichtung (4a, 4b) zur Ermittlung der geschätzten Impulsantworten (H1, H2) aufweist, wobei die geschätzte Impulsantwort (H1, H2) des jeweiligen Empfangszweiges (a, b) aus einer im Empfänger gespeicherten Vergleichsdatenfolge (v) und einer in einer gesendeten Datenfolge enthaltenen Trainingsdatenfolge individuell schätzbar ist.

7. Empfänger nach einem der Ansprüche 1 bis 5,
   dadurch gekennzeichnet,
   daß in der gesendeten Datenfolge eine Trainigsdatenfolge enthalten ist, aus der mit einer im Empfänger gespeicherten Vergleichsdatenfolge die Impulsantwort der Übertragungsstrecke in jedem Empfangszweig (a, b) individuell geschätzt wird.

## Claims

1. A receiver (5a, 5b, 10) comprising at least two receive branches (a, b) and including a combining arrangement (10) for combining the receive branches (a, b), characterized in that each receive branch (a, b) comprises a matched filter (1a, 1b) and an arrangement (6a, 6b) for forming the appropriate autocorrelation function (A1, A2) for the estimated impulse response (H1, H2) of the individual receive branches (a, b), in that the receiver (5a, 5b, 10) comprises a first adder circuit (11) for adding together the matched filter output signals ($z_{a'}$, $z_{b'}$) which have been weighted with weight factors to form a first sum (S1) and a second adder circuit (12) for adding together the receive branch autocorrelation functions (A1, A2) weighted with the weight factors to form a second sum (S2), and includes an equalizer (3, 7) evaluating the first and second sums (S1, S2), the weight factors being approximately inversely proportional to an instantaneous noise power ($\sigma_1^2$, $\sigma_2^2$) in the respective receive branch (a, b).

2. A receiver as claimed in Claim 1, characterized in that the equalizer (3, 7) comprises an evaluation arrangement (7) for evaluating the first and second sums (S1, S2), while metrics for the equalizer (3, 7) which is specifically based on the Viterbi method can be produced from the first and second sums (S1, S2) in the evaluation arrangement (7).

3. A receiver as claimed in one of the Claims 1 or 2, characterized in that the receiver (5a, 5b, 10) in at least one receive branch (a, b) comprises matching means (2a, 2b) for matching the estimated impulse response (H1, H2) at predeterminable intervals to the transmission requirements.

4. A receiver as claimed in Claim 3, characterized in that the matching means (2a, 2b) match an estimated impulse response (H1, H2) only in the receive branch (a, b) that has the larger estimated maximum ratio combining.

5. A receiver as claimed in one of the Claims 1 to 4, characterized in that the metrics are formed in accordance with the following equation:

$$\lambda(S_{n-1}, S_n) = -\text{Re}\{c_n\ (Y_n - \sum_{l=1}^{L} c_{n-l}\ \rho_l)\}\ , \ \text{with}\ \ c_n = 1 - 2b_n$$

where the bits $b_{n-L} ... b_n$ denote the transition of a state $S_{n-1} = (b_{n-L} ... b_{n-1})$ to a state $S_n = (b_{nL+1}, ... b_n)$, $Y_n$ denotes

the first sum (S1) and $\rho_1$ denotes the second sum (S2), n denotes a sampling instant and 1 denotes a finite number of previous bits.

6. A receiver as claimed in one of the Claims 1 to 5, characterized in that the receiver (5a, 5b, 10) comprises an estimation circuit (4a, 4b) for determining the estimated impulse responses (H1, H2), while the estimated impulse response (H1, H2) of each receive branch (a, b) may individually be estimated on the basis of a comparison data sequence (v) stored in the receiver and a training data sequence contained in a transmitted data sequence.

7. A receiver as claimed in one of the Claims 1 to 5, characterized in that the transmitted data sequence comprises a training data sequence from which the impulse response of the radio transmission link in each receive branch (a, b) is individually estimated with the aid of a comparison data sequence stored in the receiver.

**Revendications**

1. Récepteur (5a, 5b, 10) avec au moins deux branches de réception (a, b) avec un dispositif (10) pour la combinaison des branches de réception (a, b) caractérisé en ce que chaque branche de réception (a, b) présente respectivement un filtre adapté (1a, 1b) et respectivement un dispositif (6a, 6b) pour la formation de la fonction respective d'autocorrélation (A1, A2) en vue de la réponse d'impulsion évaluée (H1, H2) des branches de réception individuelles (a, b), que le récepteur (5a, 5b, 10) présente un premier dispositif d'addition (11) pour l'addition de signaux de sortie ($z_a'$, $z_b'$) des filtres adaptés (1a, 1b) pondérés avec des facteurs de pondération en une première somme (S1) et un deuxième dispositif d'addition (12) pour l'addition des fonctions d'autocorrélation (A1, A2) des branches de réception (a, b) pondérées par les facteurs de pondération en une deuxième somme (S2) et un correcteur (3, 7) analysant les première (S1) et deuxième sommes (S2), les facteurs de pondération étant inversement proportionnels à une puissance parasite instantanée ($\sigma_1^2$, $\sigma_2^2$) dans la branche de réception respective (a, b).

2. Récepteur selon la revendication 1, caractérisé en ce que le correcteur (3, 7) présente un dispositif d'analyse (7) pour l'évaluation des première (S1) et deuxième (S2) sommes, des métriques pour les correcteurs (3, 7) basés particulièrement sur le procédé de Viterbi pouvant être obtenues à partir des première (S1) et deuxième (S2) sommes dans le dispositif d'analyse (7).

3. Récepteur selon l'une des revendications 1 ou 2, caractérisé en ce que le récepteur (5a, 5b, 10) présente dans au moins une branche de réception (a, b) des moyens (2a, 2b) pour l'adaptation de la réponse d'impulsion évaluée (H1, H2) dans des intervalles prédéfinis aux conditions de transmission.

4. Récepteur selon la revendication 3, caractérisé en ce que les moyens (2a, 2b) d'adaptation adaptent uniquement une réponse d'impulsion estimée (H1, H2) dans la branche de réception (a, b) qui présente le plus grand rapport signal/bruit évalué.

5. Récepteur selon l'une des revendications 1 à 4, caractérisé en ce que les métriques selon l'équation :

$$\lambda(S_{n-1}, S_n) = -\mathrm{Re}\left\{c_n\left(y_n - \sum_{l=1}^{L} c_{n-1}\, P_l\right)\right\}$$

avec $c_n = 1-2b_n$
les signes binaires $b_{n-L}...b_n$ caractérisant la transition d'un état $S_{n-1} = (b_{n-L}...b_{n-1})$ dans un état $S_n = (b_{n-L+1}...b_n)$, $Y_n$ la première somme (S1) et $\rho_i$ la deuxième somme (S2), n un moment de balayage et 1 un nombre fini de signes binaires précédents.

6. Récepteur selon l'une des revendications 1 à 5, caractérisé en ce que le récepteur (5a, 5b, 10) présente un dispositif d'évaluation (4a, 4b) pour déterminer les réponses d'impulsion évaluées (H1, H2), la réponse d'impulsion évaluée (H1, H2) de la branche de réception respective (a, b) pouvant être évaluée individuellement à partir d'une séquence de données de comparaison (v) sauvée dans le récepteur et d'une séquence de données de formation contenue dans une séquence de données transmise.

7. Récepteur selon l'une des revendications 1 à 5, caractérisé en ce que la séquence de données transmise contient une séquence de données de formation à partir de laquelle la réponse d'impulsion de la voie de transmission est évaluée individuellement dans chaque branche de réception (a, b) avec une séquence de données de comparaison sauvée dans le récepteur.

FIG.1

FIG.2

FIG.3

FIG.4

FIG.5